# EUROPEAN PATENT SPECIFICATION

(11) **EP 0 963 902 B1**
(45) Date of publication and mention of the grant of the patent: **09.02.2000**
(21) Application number: 98830469.7
(22) Date of filing: 31.07.1998
(51) Int. Cl.: B62D 53/08

(54) **A bearing structure for vehicle fifth wheels**
Lagerstruktur für Sattelzugfahrzeug
Structure de palier pour sellette d'attelage de véhicule

(43) Date of publication of application: 15.12.1999
(73) Proprietor: V. Orlandi S.p.A., 25020 Flero (Brescia) (IT)
(72) Inventor: Inverardi, Angelo, 25030 Lograto (Brescia) (IT)
(74) Representative: Sutto, Luca

(56) References cited:
- EP-A- 0 087 903
- EP-A- 0 694 467
- US-A- 4 762 334
- US-A- 5 639 106

## Description

The present invention relates to a bearing structure for vehicle fifth wheels comprising the characteristics expressed in the preamble to Claim 1.

As is well known, trailers are in many cases towed by motor vehicles with the aid of towing devices comprising a fifth wheel plate borne by the towing vehicle, or tractor, and able to be engaged by a hitching pin provided on the trailer.

The fifth wheel plate bears down on articulation heads provided on top of respective support stands.

Each support stand further presents an attachment portion provided at the bottom whereby the support stand itself is engaged to a respective side member comprised in the frame of the tractor. More particularly, the engagement of the attachment portions to the side members of the frame normally occurs through the interposition of an interconnecting plate fastened onto the side members themselves.

This interconnecting plate offers an ample bearing surface which aids in fastening the attachment portions and, at the same time, connects one side member with the other thereby strengthening the entire trailer frame structure.

However, the presence of the interconnecting plates entails an increase in the manufacturing costs of the bearing structure and, above all, an increase in the overall weight thereof.

European patent EP 694467 tackles the aforesaid problems, proposing a bearing structure conceived in such a way as to eliminate the need to provide the aforesaid interconnecting plate on the frame.

In this bearing structure, the stands are able to be fastened onto the side members of the frame with the aid of suitable connecting brackets, and they are mutually interconnected by means of a stiffening bar extending perpendicularly with respect to the side members themselves. More particularly, the support element of each stand is essentially defined by a triangular plate presenting a lower edge bent horizontally, in correspondence with which the stand is fastened onto the respective connecting bracket.

On each support element are perpendicularly engaged two "L" shaped lateral plates set mutually side by side whose lower portions form a housing seat for the fastening of a respective end of the stiffening bar.

The lateral plates, set parallel to each other, present upper terminal edges forming, with an upper terminal edge of the support element, an essentially "U" shaped bearing surface. On such bearing surface is welded an articulation head ready for the engagement of the fifth wheel plate.

The bearing structure described above allows an appreciable weight reduction with respect to common bearing structures employing the interconnection plate, the latter being replaced by the stiffening bar, whose structure is lighter and more compact.

However, the bearing structure proposed by the aforesaid European patent is rather complex to manufacture, and does not guarantee an optimal resistance to the stresses due to the transport of the trailer.

The object of the present invention is to solve the problems noted in the prior art by proposing a bearing structure for vehicle fifth wheels that effectively withstands stresses and dynamic loads, whilst still presenting an extremely reduced weight.

Another object of the invention is to provide a bearing structure that is easy to manufacture and simple to mount on the tractor, and presents reduced manufacturing costs.

These aims and others besides, which shall be made more evident in the course of the present description, are attained by a bearing structure for motor vehicle fifth wheels comprising the characteristics defined in the characterising part of Claim 1.

Further features and advantages shall become more readily apparent from the detailed description of a preferred, but not exclusive, embodiment of a bearing structure for motor vehicle fifth wheels according to the present invention. The description shall be provided hereafter with reference to the accompanying drawings, provided purely by way of non limiting indication, wherein:

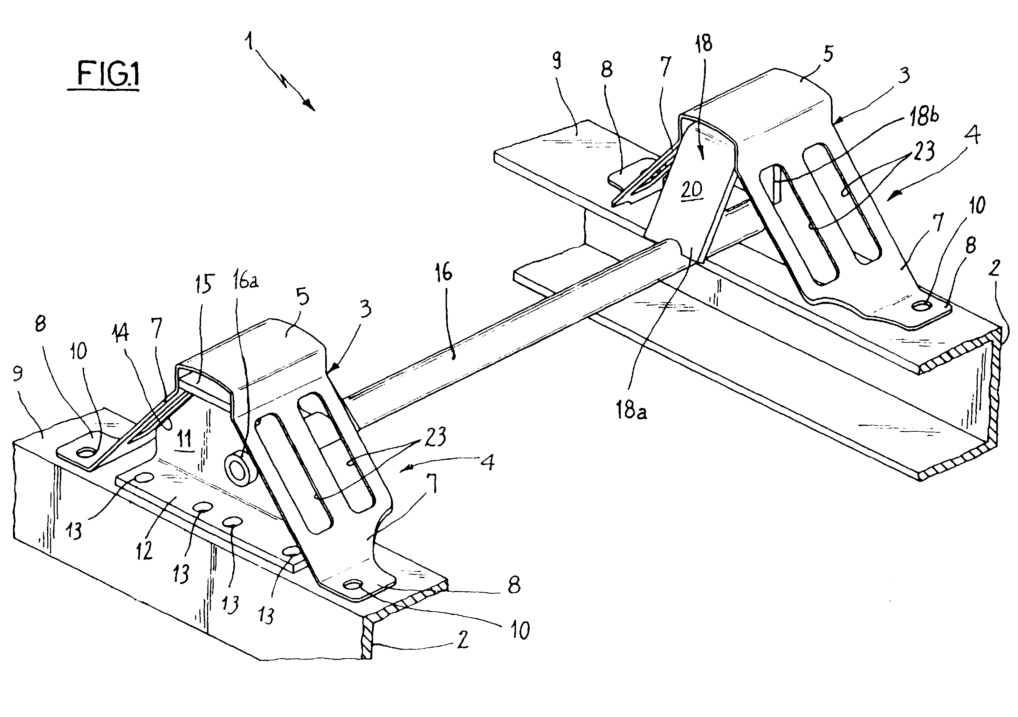

- Fig. 1 shows a perspective view of a bearing structure for motor vehicle fifth wheels set on side members of the frame of a tractor;

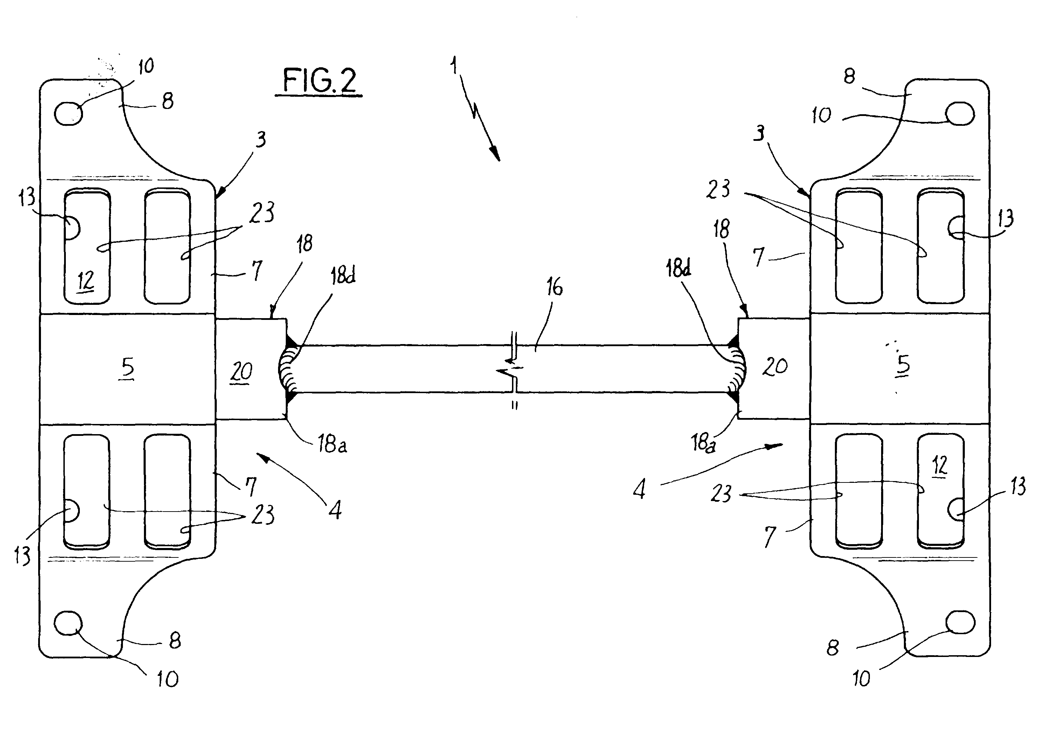

- Fig. 2 shows a plan view of the bearing structure;

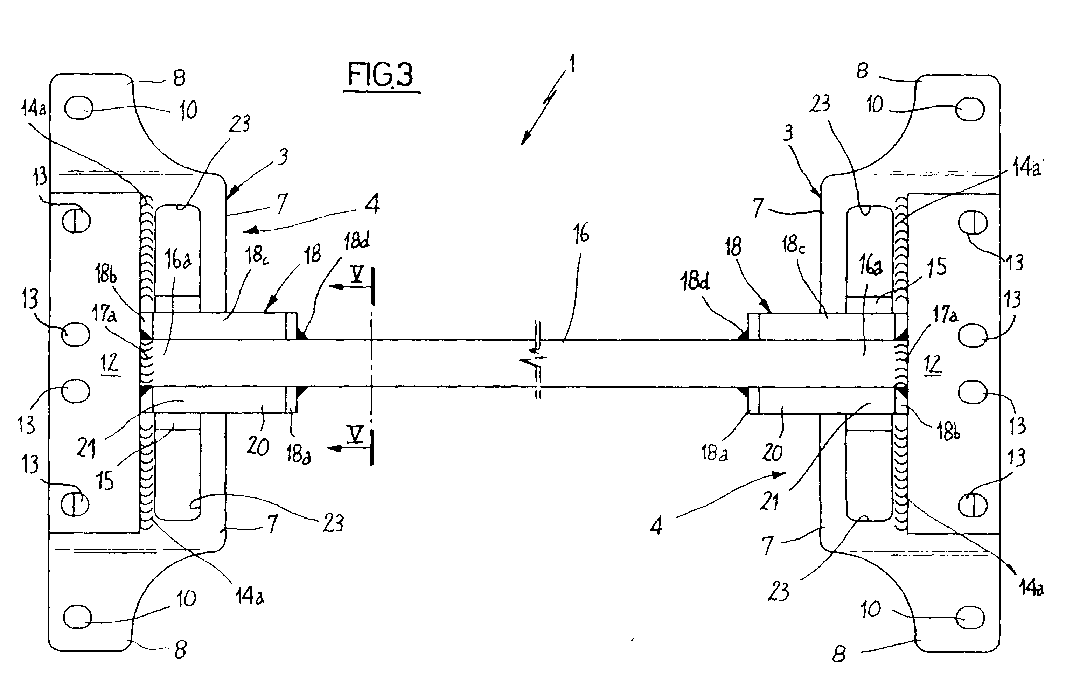

- Fig. 3 shows a bottom view of the bearing structure;

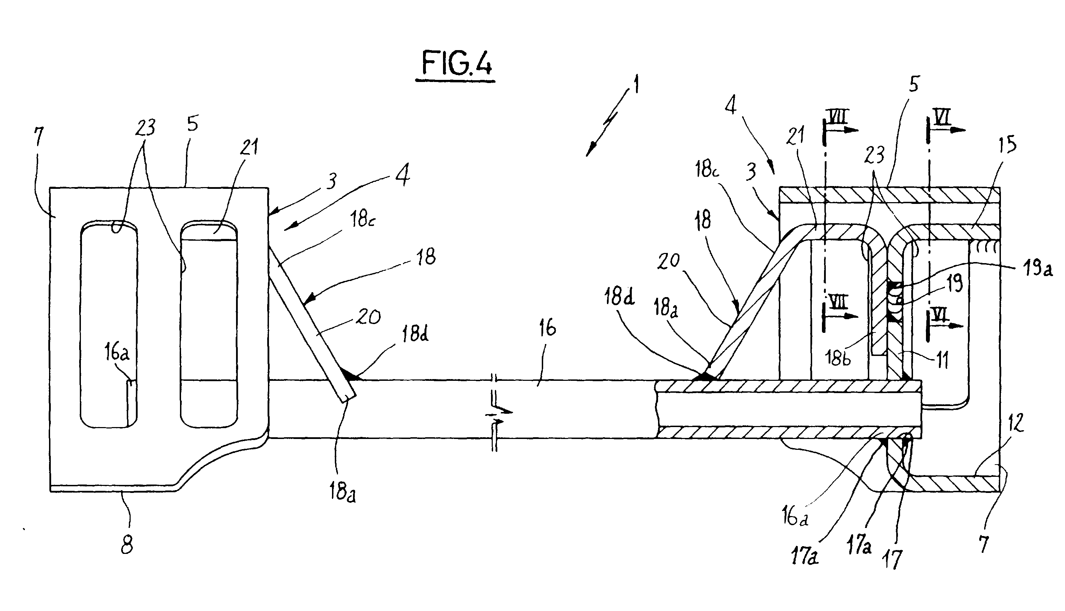

- Fig. 4 is a partially interrupted section of the bearing structure shown in a side view;
- Fig. 5 is a section of the bearing structure performed according to a trace V-V of Fig. 3;
- Fig. 6 is a section of the bearing structure performed according to a trace VI-VI of Fig. 4;
- Fig. 7 is a section of the bearing structure performed according to trace VII-VII of Fig. 4.

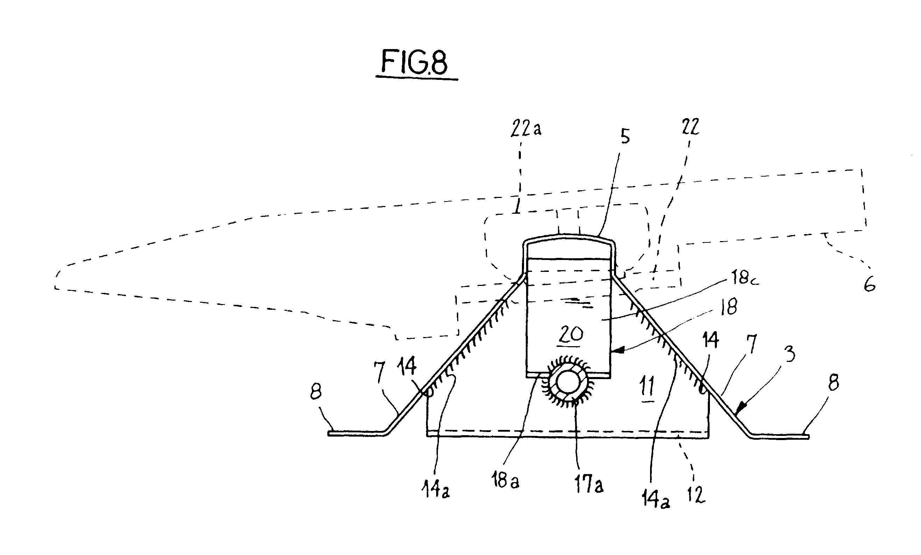

- Fig. 8 shows a sectioned view of the support structure with a fifth wheel plate represented by a dashed line.

With reference to the aforesaid drawings, the number 1 indicates in its entirety a bearing structure for motor vehicle fifth wheels.

The bearing structure 1 is able to be engaged on a usual frame of a tractor, comprising a pair of side members 2 set parallel side by side and presenting each, in cross section, a "C" shaped profile.

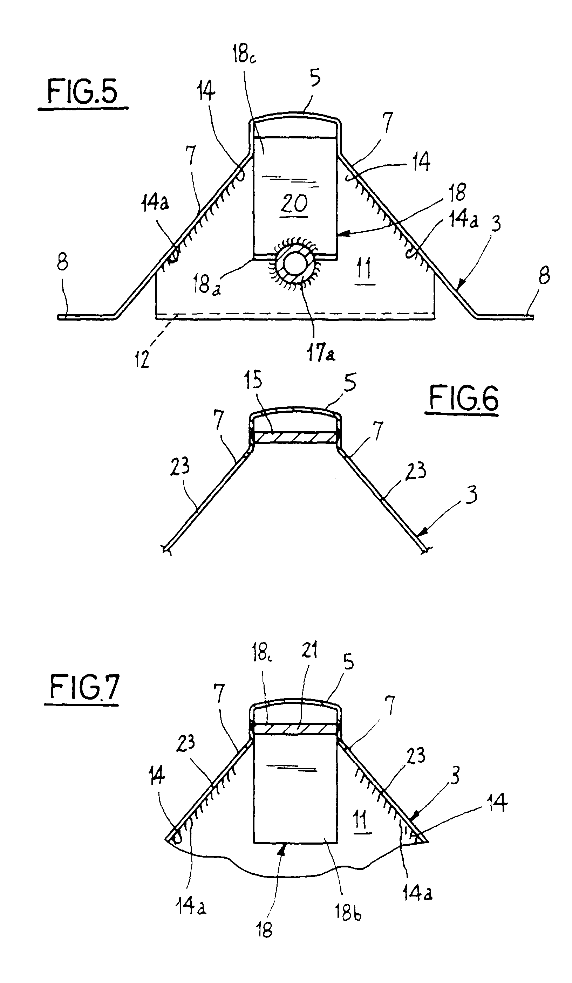

The bearing structure 1 can be engaged to the frame of the trailer by means of a pair of support stands 3 each of which essentially comprises a support element 4 able to be fastened to a respective side member 2, and an articulation head 5 for the engagement of a fifth wheel plate 6 (Fig. 6).

More specifically the support element 4 of each support stand 3 comprises at least a pair of support arms 7.

The support arms 7 of each support stand 3 extend converging symmetrically to each other away from the side member 2, until they join the articulation head 5, thereby keeping the latter raised with respect to the side member itself. In a preferential embodiment, the articulation head 5 and the support arms 7 of each support stand 3 are advantageously obtained in a single piece from blanked and bent sheet metal presenting lower terminal appendices 8 set in a horizontal plane and able to be rigidly engaged on an upper wing 9 of the respective side member 2 for instance by means of threaded elements crossing through respective first holes 10 provided on the same lower terminal appendices 8.

Each support element 4 further comprises at least one upright plate 11 which preferably lies in an essentially vertical plane, median with respect to the articulation head 5. The upright plate 11 presents at least one lower edge 12 oriented perpendicularly with respect to the plane whereon the plate itself lies and set coplanar with respect to the lower terminal appendices 8 of the support arms 7.

The lower edge 12 advantageously presents second holes 13 for the engagement of respective threaded elements for fastening to the upper wing 9 of the side member 2.

Each upright plate 11 further presents inclined lateral edges 14 which are in direct contact with the respective support arms 7.

In other words, the support arms 7 are in a bearing relationship on the respective inclined lateral edges 14 and moreover are fastened thereto, by means of first welds 14a effected along the inclined edges themselves.

The upright plate 11 of each support stand 3 is preferably provided with an upper edge 15 bent back horizontally and oriented away from the opposite stand, below the articulation head 5, for purposes which shall become more readily apparent farther on.

Between the support stands 3 extends a stiffening bar 16, of tubular shape, presenting in cross section a preferably circular profile.

More specifically, the stiffening bar 16 engages the support stands 3 by means of its own ends 16a inserted in respective coupling openings 17 obtained on the vertical plates 11 of the support elements 4. The stiffening bar 16 is fastened to each upright plate 11 preferably by means of second welds 17a effected along the edges of the coupling openings 17.

To each support element 4 is also associated at least one essentially "C" shaped reinforcing element 18, presenting a first end 18a engaged to the stiffening bar 16 and a second end 18b rigidly engaging the respective upright plate 11 to stiffen the bearing structure 1.

More in detail, the first end 18a of each reinforcing element 18 is fastened to the stiffening bar 16 at an appropriate distance from the upright plate 11 by means of a third weld 18d effected along a terminal edge of the first end itself, shaped counter to the stiffening bar 16.

The second end 18b of the respective reinforcing element 18 is fastened to the upright plate 11 at an appropriate distance from the stiffening bar 16, preferably by means of a fourth weld 19a effected along the edge of an attachment opening 19 obtained on the upright plate itself.

The first end 18a and the second end 18b of each reinforcing element 18 are connected by at least one intermediate portion 18c presenting a first section 20 rising obliquely from the stiffening bar 16 and a second section 21 essentially horizontal, and coplanar with respect to the upper edge 15 of the upright plate 11 and connected to the second end 18b.

The support structure 1 further comprises fastening means 22 able to be attached to the fifth wheel plate 6 to keep the latter joined to the bearing structure 1.

More specifically the fastening means 22 comprise fastening brackets acting through one or more securing through openings 23 obtained along the longitudinal development of each support arm 7.

On each support arm 7 are obtained two securing openings 23 arranged parallel to allow the brackets insertable therein to act respectively on the second section 21 of the aforesaid intermediate portion 18c and on the upper edge 15 of the respective upright plate 11, following the interposition of an elastomeric element 22a.

Both the intermediate portion 18c and the upper edge 15 thus provide the fastening brackets with support planes to assure the fastening of the fifth wheel plate 6 to the bearing structure 1.

The bearing structure 1 described above solves the problems noted in the prior art.

The use of a stiffening bar fastened with its own ends to the support stands of the plate confers to the bearing structure a greater resistance with respect to the stresses and dynamic loads whereto the entire structure is subjected when towing trailers.

The structure of the support element of each stand is such that the load bearing down on the articulation head is advantageously distributed between two support arms and the upright plate, before being transmitted to the respective side member.

It should be noted that the increase in torsional and flexural resistance conferred to the frame by the stiffening bar is further aided by the presence of the reinforcing elements which provide the structure with greater strength by reducing the tendency of the support stands to rotate in the direction of the stiffening bar. Advantageously, the components of the support stands can be obtained easily through simple sheet metal blanking and bending operations, thereby allowing considerably to contain manufacturing costs.

The bearing structure further allows considerably to reduce the weights which prior art solutions employing interconnecting plates entailed.

## Claims

1. A Bearing structure (1) for vehicle fifth wheels, comprising:
- a pair of stands (3) each comprising a support element (4) able to be engaged to a respective side member (2) comprised in the frame of a motor vehicle, and an articulation head (5) for the engagement of a fifth wheel plate (6) borne at the top by the support element (4);
- at least one stiffening bar (16) having its ends (16) rigidly engaged each to one of the stands (3),
characterised in that each of the ends (16a) of the stiffening bar (16) is rigidly engaged through a coupling opening (17) obtained on the respective support element (4).

2. Bearing structure according to claim 1, characterised in that the ends (16a) of the stiffening bar (16) are fastened to the respective support elements (4) by means of welds effected along the edges of the respective coupling openings (17).

3. Bearing structure according to claim 1, characterised in that said stiffening bar (16) presents tubular shape.

4. Bearing structure according to claim 1, characterised in that said stiffening bar (16) presents a circular cross section profile.

5. Bearing structure according to claim 1, characterised in that the support element (4) of each stand (3) comprises at least one pair of support arms (7) able to be engaged to the respective side member (2) and engaging the respective articulation head (5) maintaining the latter raised from the side members themselves, said support arms (7) converging one with respect to the other towards the articulation head (5).

6. Bearing structure according to claim 5, characterised in that along the longitudinal development of each support arm (7) are obtained one or more through openings for securing (23), said securing openings (23) being crossed by fastening means (22) to retain the fifth wheel plate (6) joined to the bearing structure (1).

7. Bearing structure according to claim 5, characterised in that the articulation head (5) and the respective support arms (7) engaged thereto are obtained in a single piece of blanked and bent sheet metal.

8. Bearing structure according to claim 1, characterised in that each support element (4) presents at least one essentially vertical plate (11) whereon is obtained one of said coupling openings (17).

9. Bearing structure according to claim 8, characterised in that the upright plate (11) of each support element (4) presents at least one lower edge (12) oriented perpendicularly with respect to the plane wherein the upright plate (11) lies and able to be engaged on the respective side member (2) to fasten thereon the support element itself.

10. Bearing structure according to claim 8, characterised in that said upright plate (11) further presents an upper edge (15) bent back horizontally and interacting with fastening means (22) to retain the fifth wheel plate (6) joined to the support structure (1).

11. Bearing structure according to claim 5 and 9, characterised in that said support arms (7) are in bearing relationship on respective inclined lateral edges (14) presented by the upright plate (11).

12. Bearing structure according to claim 1, characterised in that said support arms (7) are welded to the upright plate (11) along the inclined lateral edges (14) thereof.

13. Bearing structure according to claim 9, characterised in that said support element (4) comprises at least one reinforcing element (18) having a first end (18a) engaged to the stiffening bar (16) and a second end (18b) rigidly engaging said upright plate (11) to stiffen said support structure (1).

14. Bearing structure according to claim 13, characterised in that the first end (18a) is fastened to the reinforcing bar (16) by means of at least one weld effected along a terminal edge of the first end itself, shaped counter to the stiffening bar (16).

15. Bearing structure according to claim 13, characterised in that the second end (18b) of the reinforcing element (18) is welded to the upright plate (11) along the edge of an attachment opening (19) obtained on the upright plate itself.

16. Bearing structure according to claim 13, characterised in that said reinforcing element (18) comprises at least one intermediate portion (18c) interacting with fastening means (22) to retain the fifth wheel plate (6) joined to the bearing structure (1).

## Patentansprüche

1. Tragaufbau (1) für Sattelkupplungen von Kraftfahrzeugen, umfassend:
- ein Paar von Böcken (3), die jeweils ein Stützelement (4), das an einem entsprechenden einem Kraftfahrzeugrahmen angehörenden Holm (2) angreift, und einen Anlenkkopf (5) für das Ansetzen einer Kupplungsplatte (6) umfassen, die oben durch das Stützelement (4) getragen wird;
- mindestens eine Verstärkungsstange (16), welche die eigenen Enden (16) jeweils an einem der Böcke (3) starr angreifend hat,
dadurch gekennzeichnet, daß jedes der Enden (16a) der Verstärkungsstange (16) über eine am entsprechenden Stützelement (4) ausgenommene Einstecköffnung (17) starr in Eingriff steht.

2. Tragaufbau nach Anspruch 1, dadurch gekennzeichnet, daß die Enden (16a) der Verstärkungsstange (16) am jeweiligen Stützelementen (4) über Schweißnähte befestigt sind, die längs der Kanten der jeweiligen Einstecköffnungen (17) ausgeführt sind.

3. Tragaufbau nach Anspruch 1, dadurch gekennzeichnet, daß die Verstärkungsstange (16) eine rohrförmige Ausbildung aufweist.

4. Tragaufbau nach Anspruch 1, dadurch gekennzeichnet, daß die Verstärkungsstange (16) ein kreisrundes Profil im Querschnitt aufweist.

5. Tragaufbau nach Anspruch 1, dadurch gekennzeichnet, daß das Stützelement (4) eines jeden Bockes (3) mindestens ein Paar von Tragarmen (7) umfaßt, die am entsprechenden Holm (2) in Eingriff kommen und den entsprechenden Anlenkkopf (5) ergreifen, wobei dieser letztere von dem Holm selbst abgehoben bleibt, wobei die Tragarme (7) zueinander in Richtung des Anlenkkopfes (5) zusammenlaufen.

6. Tragaufbau nach Anspruch 5, dadurch gekennzeichnet, daß längs der Längsabwicklung eines jeden Tragarmes (7) eine oder mehrere durchgehende Rastöffnungen (23) ausgenommen sind, wobei die Rastöffnungen (23) von Befestigungsmitteln (22) durchdrungen werden, um die Kupplungsplatte (6) mit dem Tragaufbau (1) vereint zu halten.

7. Tragaufbau nach Anspruch 5, dadurch gekennzeichnet, daß der Anlenkkopf (5) und die entsprechenden an ihm angreifenden Tragarme (7) einstückig aus gestanztem und gebogenem Blech ausgeführt sind.

8. Tragaufbau nach Anspruch 1, dadurch gekennzeichnet, daß jedes Stützelement (4) mindestens eine im wesentliche vertikale Platte (11) aufweist, an der eine der Einstecköffnungen (17) ausgenommen ist.

9. Tragaufbau nach Anspruch 8, dadurch gekennzeichnet, daß die Ständerplatte (11) eines jeden Stützelementes (4) mindestens eine untere Kante (12) aufweist, die senkrecht zur die Stützplatte (11) enthaltenden Ebene ausgerichtet ist und am entsprechenden Holm (2) in Eingriff kommt, um an diesem letzteren das Stützelement selbst zu befestigen.

10. Tragaufbau nach Anspruch 8, dadurch gekennzeichnet, daß die Ständerplatte (11) überdies eine horizontal umgebogene Oberkante (15) aufweist, die mit Befestigungsmitteln (22) zusammenwirkt, um die Kupplungsplatte (6) mit dem Tragaufbau (1) vereint zuhalten.

11. Tragaufbau nach Anspruch 5 und 9, dadurch gekennzeichnet, daß die Tragarme (7) auf entsprechenden geneigten Seitenkanten (14) aufliegen, welche die Ständerplatte (11) aufweisen.

12. Tragaufbau nach Anspruch 1, dadurch gekennzeichnet, daß die Tragarme (7) an der Ständerplatte (11) längs der geneigten Seitenkanten (14) dieser letzteren angeschweißt sind.

13. Tragaufbau nach Anspruch 9, dadurch gekennzeichnet, daß das Stützelement (4) mindestens ein Verstärkungselement (18) umfaßt, das ein erstes, an der Verstärkungsstange (16) angreifendes Ende (18a) und ein zweites Ende (18b) besitzt, das die Ständerplatte (11) starr ergreift, um den Tragaufbau (1) zu verstärken.

14. Tragaufbau nach Anspruch 13, dadurch gekennzeichnet, daß das erste Ende (18a) an der Verstärkungsstange (16) über mindestens eine Schweißnaht befestigt ist, die längs einer Endkante des Endes selbst ausgeführt ist, die zur Verstärkungsstange (16) gegenprofiliert ist.

15. Tragaufbau nach Anspruch 13, dadurch gekennzeichnet, daß das zweite Ende (18b) des Verstärkungselementes (18) an der Ständerplatte (11) längs der Kante einer Anschlußöffnung (19) verschweißt ist, die an der Ständerplatte selbst ausgenommen ist.

16. Tragaufbau nach Anspruch 13, dadurch gekennzeichnet, daß das Verstärkungselement (18) mindestens einen Zwischenabschnitt (18c) umfaßt, der mit Befestigungsmitteln (22) zusammenwirkt, um die Kupplungsplatte (6) am Tragaufbau (1) vereint zu halten.

## Revendications

1. Structure de palier (1) pour sellette d'attelage de véhicule, comprenant:
- une paire de chevalets d'appui (3) chacun comprenant un élément de support (4) en mesure de s'engager à un longeron respectif (2) faisant partie du châssis d'un véhicule, et une tête d'articulation (5) pour l'engagement à un plateau de sellette d'attelage (6) portée au-dessus de l'élément de support (4);
- au moins une barre de raidissement (16) ayant ses extrémités (16) rigidement engagées chacune à l'un des chevalets d'appui (3),
caractérisée en ce que chacune des extrémités (16a) de la barre de raidissement (16) est engagée rigidement à travers une ouverture d'accouplement (17) obtenue sur l'élément de support respectif (4).

2. Structure de palier selon la revendication 1, caractérisée en ce que les extrémités (16a) de la barre de raidissement (16) sont fixées aux éléments de support respectifs (4) par des soudures effectuées le long des bords des ouvertures d'accouplement respectives (17).

3. Structure de palier selon la revendication 1, caractérisée en ce que ladite barre de raidissement (16) présente une forme tubulaire.

4. Structure de palier selon la revendication 1, caractérisée en ce que ladite barre de raidissement (16) présente un profil en coupe transversale circulaire.

5. Structure de palier selon la revendication 1, caractérisée en ce que l'élément de support (4) de chaque chevalet d'appui (3) comporte au moins une paire de bras support (7) susceptibles de s'engager au longeron respectif (2) et engageant la tête d'articulation respective (5), gardant cette dernière soulevée des longerons, lesdits bras support (7) convergeant l'un par rapport à l'autre vers la tête d'articulation (5).

6. Structure de palier selon la revendication 5, caractérisée en ce qu'une ou plusieurs ouvertures traversantes de blocage (23) sont obtenues le long du développement longitudinal de chaque bras support (7), lesdites ouvertures de blocage (23) étant traversées par des moyens de fixation (22) pour maintenir le plateau de sellette d'attelage (6) uni à la structure de palier (1).

7. Structure de palier selon la revendication 5, caractérisée en ce que la tête d'articulation (5) et les bras support respectifs (7) reliés à celle-ci sont obtenus d'un seul tenant en tôle découpée et pliée.

8. Structure de palier selon la revendication 1, caractérisée en ce chaque élément de support (4) présente au moins une plaque essentiellement verticale (11) dans laquelle est formée une desdites ouvertures d'accouplement (17).

9. Structure de palier selon la revendication 8, caractérisée en ce que la plaque montante (11) de chaque élément de support (4) présente au moins un bord inférieur (12) orienté perpendiculairement par rapport au plan dans lequel est située la plaque montante (11) et en mesure de s'engager sur le longeron respectif (2) pour y fixer l'élément de support lui-même.

10. Structure de palier selon la revendication 8, caractérisée en ce que ladite plaque montante (11) présente en outre un bord supérieur (15) replié horizontalement en arrière et interagissant avec des moyens de fixation (22) pour maintenir le plateau de sellette d'attelage (6) uni à la structure de pallier (1).

11. Structure de palier selon la revendication 5 et 9, caractérisée en ce que lesdits bras support (7) sont en relation d'appui sur des bords latéraux inclinés respectifs (14) présentés par la plaque montante (11).

12. Structure de palier selon la revendication 1, caractérisée en ce que lesdits bras support (7) sont soudés à la plaque montante (11) le long des bords latéraux inclinés (14) de cette dernière.

13. Structure de palier selon a revendication 9, caractérisée en ce que ledit élément de support (4) comporte au moins un élément de renforcement (18) ayant une première extrémité (18a) engagée à la barre de raidissement (16) et une seconde extrémité (18b) engageant rigidement ladite plaque montante (11) en vue de raidir ladite structure de palier (1).

14. Structure de palier selon la revendication 13, caractérisée en ce que la première extrémité (18a) est fixée à la barre de raidissement (16) par au moins une soudure effectuée le long d'un bord terminal de ladite première extrémité, dont la forme épouse celle de la barre de raidissement (16).

15. Structure de palier selon la revendication 13, caractérisée en ce que la seconde extrémité (18b) de l'élément de renforcement (18) est soudée à la plaque montante (11) le long du bord d'une ouverture d'attelage (19) obtenue sur la plaque montante elle-même.

16. Structure de palier selon la revendication 13, caractérisée en ce que ledit élément de renforcement (18) comporte au moins une portion intermédiaire (18c) interagissant avec des moyens de fixation (22) pour maintenir le plateau de sellette d'attelage (6) uni à la structure de palier (1).
